# FASCICULE DE BREVET EUROPEEN

(11) **EP 3 374 872 B1**
(45) Date de publication et mention de la délivrance du brevet: **11.03.2020**
(21) Numéro de dépôt: 16793897.6
(22) Date de dépôt: 09.11.2016
(51) Int. Cl.: G06F 11/14, G06F 9/48, G06F 11/16, G06F 11/18

(54) **PROCÉDÉ DE CONTRÔLE DE L'ÉTAT DE FONCTIONNEMENT D'UN SYSTÈME PAR REDONDANCE**
VERFAHREN ZUR STEUERUNG DES BETRIEBSZUSTANDS EINES SYSTEMS MITTELS REDUNDANZ
METHOD FOR CONTROLLING THE OPERATING STATE OF A SYSTEM BY REDUNDANCY

(30) Priorité: 10.11.2015 FR 1502358
(43) Date de publication de la demande: 19.09.2018
(73) Titulaire: Thales, 92400 Courbevoie (FR)
(72) Inventeur: GRASSET, Arnaud, 91767 Palaiseau Cedex (FR)
(74) Mandataire: Lavoix
(86) Numéro de dépôt international: PCT/EP2016/077162
(87) Numéro de publication internationale: WO 2017/081095

(56) Documents cités:
- FOHLER G: "Adaptive fault-tolerance with statically scheduled real-time systems", REAL-TIME SYSTEMS, 1997. PROCEEDINGS., NINTH EUROMICRO WORKSHOP ON TOLEDO, SPAIN 11-13 JUNE 1997, LOS ALAMITOS, CA, USA,IEEE COMPUT. SOC, US, 11 juin 1997 (1997-06-11), pages 161-167, XP010240872, DOI: 10.1109/EMWRTS.1997.613777 ISBN: 978-0-8186-8034-2
- STEFAN KRAMER ET AL: "Reliability analysis of real-time scheduling", APPLIED ELECTRONICS (AE), 2012 INTERNATIONAL CONFERENCE ON, IEEE, 5 septembre 2012 (2012-09-05), pages 151-156, XP032247961, ISBN: 978-1-4673-1963-8

## Description

La présente invention concerne des procédés de contrôle de l'état de fonctionnement d'un système. La présente invention se rapporte également à des contrôleurs associés de l'état de fonctionnement d'un système. La présente invention se rapporte aussi à un appareil de transport comprenant un tel contrôleur.

Dans le domaine de l'avionique, les temps de réponse des systèmes de pilotage d'un aéronef doivent être garantis de manière stricte pour éviter la survenue d'accidents. De ce fait, pour assurer le respect des temps de réponse, des systèmes temps-réel sont embarqués dans les aéronefs. Les systèmes temps-réel sont des systèmes informatiques se différenciant des autres systèmes informatiques par la prise en compte de contraintes temporelles dont le respect est aussi important que l'exactitude du résultat délivré par le système.

Pour de tels systèmes temps-réels, il est donc vital d'assurer un haut niveau de fiabilité tout en garantissant que les contraintes temps-réels sont respectées. Un système est considéré fiable lorsque la probabilité qu'a le système de remplir la mission qui lui a été attribuée sur une durée donnée correspond à la probabilité spécifiée dans le cahier des charges.

Le respect des contraintes temps-réel est très souvent obtenu par estimation du « pire temps d'exécution » de chaque tâche du système, puis par ajout de marges de conception aux pires temps d'exécution estimés. Le pire temps d'exécution d'une tâche (abrégé en anglais par l'acronyme WCET pour *Worst Case Execution Time*) est défini comme le plus long temps pour que la tâche s'exécute sur une plateforme matérielle donnée.

Cependant, de telles marges étant relativement importantes, les besoins en performance des systèmes temps-réel sont surdimensionnés par rapport aux besoins réels, ce qui pénalise les performances et limite les fonctionnalités pouvant être implémentées sur de tels systèmes.

En outre, les composants des systèmes temps-réel sont soumis à des mécanismes d'usure et de défaillance, intrinsèques aux technologies utilisées pour ces composants. En particulier, les composants à base de semi-conducteurs sont la cible de radiations cosmiques ou d'interférences électromagnétiques induisant des fautes transitoires lors de l'exécution des tâches des systèmes, tandis que des défauts de fabrication et la dégradation des composants au cours de leur durée de vie induisent des fautes permanentes. De tels phénomènes induisent par conséquent une réduction de la fiabilité des systèmes temps-réel.

L'article « Adaptive Fault-Tolerance with Statically Scheduled Real-Time Systems» de Fohler, publié le 11 juin 1997 dans Real Time Systems, 1997. Proceedings., Ninth Euromicro Workshop on Toledo, Spain, 11-13 June 199, Los Alamitos, CA, USA, IEEE Comput. Soc, US, pages 161 à 167 donne un exemple d'une méthode d'analyse de systèmes temps réel.

Il existe donc un besoin pour améliorer la fiabilité des systèmes temps-réel sans dégrader les performances de tels systèmes.

A cet effet, l'invention a pour objet un procédé de contrôle selon la revendication 1.

Suivant des modes de mise en oeuvre particuliers, le procédé de contrôle comprend les caractéristiques de la revendication 2.

L'invention concerne également un procédé de contrôle selon la revendication 3.

Suivant des modes de mise en oeuvre particuliers, le procédé de contrôle précédent comprend une ou plusieurs des caractéristiques des revendications 4 à 10, prises isolément ou suivant toutes les combinaisons techniquement possibles.

L'invention concerne aussi un contrôleur selon la revendication 11.

L'invention concerne, en outre, un autre contrôleur selon la revendication 12.

L'invention concerne également un appareil de transport selon la revendication 13.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un exemple d'un contrôleur permettant la mise en oeuvre d'un procédé de contrôle de l'état de fonctionnement d'un système,
- figure 2, un ordinogramme d'un premier exemple de mise en œuvre d'un procédé de contrôle de l'état de fonctionnement d'un système,
- figure 3, une représentation schématique d'une exécution redondante de type temporelle d'une tâche sur un organe, chaque exécution de la tâche sur l'organe étant réalisée sur une période de temps inférieure ou égale au pire temps d'exécution de la tâche,
- figure 4, une représentation schématique d'une exécution redondante de type temporelle d'une tâche sur un organe uniquement lorsque le temps d'exécution de la tâche lors de la première exécution est inférieur ou égal à la moitié du pire temps d'exécution de la tâche,
- figure 5, une représentation schématique d'une exécution redondante de type temporelle d'une tâche sur un organe uniquement lorsque le temps d'exécution de la tâche lors de la première exécution est inférieur ou égal au tiers du pire temps d'exécution de la tâche,
- figure 6, une représentation schématique d'une exécution redondante de type temporelle d'une tâche sur un organe lorsque le temps d'exécution de la tâche lors de la première exécution ne remplit pas la condition de la figure 5 mais a été exécuté sur une période de temps inférieure ou égale à la moitié du temps d'exécution de la tâche,
- figure 7, un ordinogramme d'un deuxième exemple de mise en œuvre d'un procédé de contrôle de l'état de fonctionnement d'un système,
- figure 8, une représentation schématique d'une exécution redondante de type spatiale de deux tâches sur deux organes uniquement lorsqu'une première condition est vérifiée,
- figure 9, une représentation schématique d'une exécution redondante de type spatiale de deux tâches sur trois organes uniquement lorsqu'une première condition et une deuxième condition sont vérifiées,
- figure 10, une représentation schématique d'une exécution redondante de type temporelle d'une tâche, la deuxième exécution de la tâche étant dégradée lorsque la première condition n'est pas vérifiée, et
- figure 11, une représentation schématique d'une vérification de la pertinence du résultat obtenu suite à la première exécution d'une tâche lorsque la première condition n'est pas vérifiée.

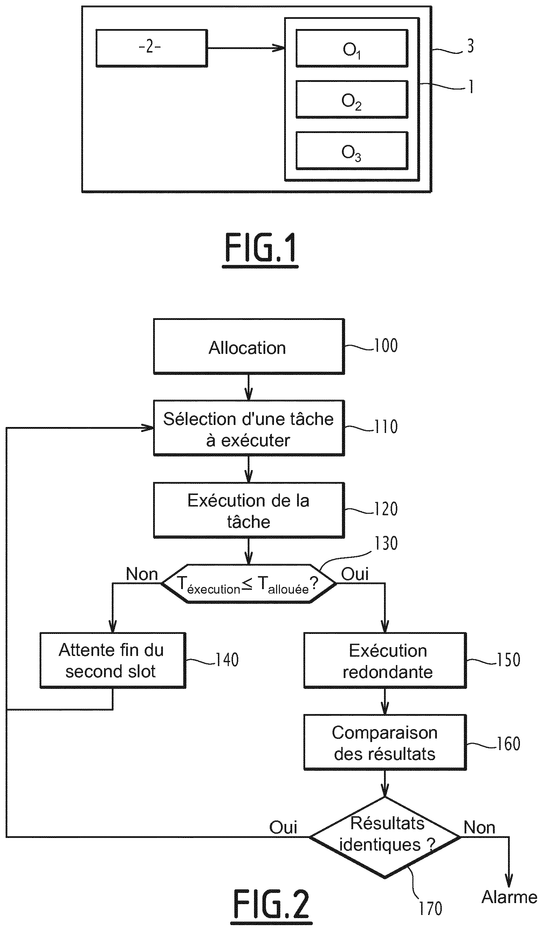

Un système 1 et un contrôleur 2 de l'état de fonctionnement du système 1 sont illustrés sur la figure 1.

Le système 1 est, par exemple, un système temps-réel. Dans l'exemple de la figure 1, le système 1 est embarqué dans un appareil de transport 3, tel qu'une automobile ou un aéronef, pour lequel le respect des contraintes temporelles est un paramètre critique.

Le système 1 comprend un ensemble d'organes O₁,..., Oₙ et un ensemble de tâches T₁,..., Tₙ. Dans l'exemple de la figure 1, trois organes O₁, O₂, O₃ du système 1 sont représentés. Les organes O₁,..., Oₙ sont des éléments d'architecture remplissant une fonction prédéterminée. Les organes O₁,..., Oₙ sont également appelés « cœurs de processeurs ». Les tâches T₁,..., Tₙ sont des séquences d'instructions exécutables sur les organes O₁,..., Oₙ du système 1. Les séquences d'instructions sont, par exemple, relatives à des commandes du système 1. Lorsque le système 1 est embarqué dans un aéronef, les commandes sont, par exemple, des commandes de changement de trajectoire ou d'atterrissage de l'aéronef.

Le contrôleur 2 interagit avec le système 1 pour contrôler l'état de fonctionnement du système 1. L'état de fonctionnement d'un système est obtenu par réalisation de tests de défaillances sur le système et permet de déterminer la fiabilité du système.

Dans l'exemple de la figure 1, le contrôleur 2 est embarqué dans le même équipement que le système 1 contrôlé par le contrôleur 2, par exemple dans un appareil de transport.

Le contrôleur 2 est, par exemple, un ordinateur.

Plus généralement, le contrôleur 2 est un calculateur électronique propre à manipuler et/ou transformer des données représentées comme des quantités électroniques ou physiques dans des registres du contrôleur 2 et/ou des mémoires en d'autres données similaires correspondant à des données physiques dans des mémoires, des registres ou autres types de dispositifs d'affichage, de transmission ou de mémorisation.

Le contrôleur 2 comporte un processeur comprenant une unité de traitement de données, des mémoires et un lecteur de support d'informations.

Le contrôleur 2 est propre à interagir avec un produit programme d'ordinateur comprenant un support lisible d'informations lisible par le contrôleur 2, usuellement par l'unité de traitement de données du contrôleur 2. Sur le support lisible d'information est mémorisé un programme d'ordinateur comprenant des instructions de programme.

Le programme d'ordinateur est chargeable sur l'unité de traitement de données du contrôleur 2 et est adapté pour entraîner la mise en œuvre d'un procédé de contrôle de l'état de fonctionnement du système 1.

Le fonctionnement du contrôleur 2 en interaction avec le produit programme d'ordinateur et le système 1 est maintenant décrit en référence à la figure 2, qui illustre schématiquement un premier exemple de mise en œuvre d'un procédé de contrôle de l'état de fonctionnement d'un système 1.

En variante, le contrôleur 2 est une application logicielle implémentée sur les mêmes organes O₁,..., Oₙ que les tâches T₁,..., T_{n.}

Initialement, le procédé de contrôle comprend une étape 100 d'allocation, par le contrôleur 2, d'un temps alloué à chaque tâche T₁,..., Tₙ du système 1.

Le temps alloué de chaque tâche T₁,..., Tₙ est inférieur ou égal au pire temps d'exécution, aussi appelé temps maximal d'exécution, estimé préalablement pour la tâche T₁,..., Tₙ. En particulier, le temps alloué est égal au rapport entre le pire temps d'exécution de la tâche T₁,..., Tₙ et le nombre d'exécution redondante de type temporelle de la tâche T₁,..., Tₙ. Par exemple, le temps alloué pour chaque tâche T₁,..., Tₙ est égal à la moitié ou au tiers du pire temps d'exécution estimé pour la tâche T₁,..., Tₙ.

Le pire temps d'exécution, désigné par la référence WCET dans la suite de la description, est, par exemple, estimé ou borné au préalable par des mesures expérimentales, des méthodes d'analyse statique de code ou des méthodes hybrides.

Le procédé de contrôle comprend également une étape 110 de sélection d'une première tâche T₁ à exécuter par le premier organe O₁ du système 1. La première tâche T₁ est, par exemple, sélectionnée à partir d'un ordonnancement statique des tâches défini lors de la conception du système 1. La première tâche T₁ est exécutable en un premier temps alloué A₁ fixé par le contrôleur 2.

Le procédé de contrôle comprend, ensuite, une étape 120 de première exécution par le premier organe O₁ de la première tâche T_{1.} A l'issue de la première exécution, un premier résultat est obtenu et une première période de temps Δ₁ est définie. La première période de temps Δ₁ est la durée mise pour l'exécution de la première tâche T₁ sur le premier organe O₁.

Le procédé de contrôle comprend, ensuite, une étape 130 de premier test d'une première condition. La première condition stipule que la première période de temps Δ₁ est inférieure ou égale au premier temps alloué A₁.

Lorsque la première condition n'est pas remplie, le procédé comprend une étape 140 d'attente pendant un temps d'attente, puis de répétition des étapes de sélection 110, de première exécution 120 et de premier test 130. La somme du temps d'attente et de la première période de temps Δ₁ est égale à un multiple du premier temps alloué A₁. Une telle somme est supérieure ou égale au pire temps d'exécution WCET de la tâche considérée. Par exemple, la somme est égale à deux fois le premier temps alloué A₁ ou à trois fois le premier temps alloué A₁.

Lorsque la première condition est remplie, le procédé de contrôle comprend une étape 150 de mise en œuvre d'au moins une deuxième exécution de la même première tâche T₁ par le même premier organe O₁ pendant une deuxième période de temps Δ₂. Chaque deuxième exécution permet d'obtenir un deuxième résultat.

Les deuxièmes exécutions sont des exécutions redondantes de type temporelle de la première tâche T₁. L'exécution redondante de type temporelle d'une tâche est l'exécution séquentielle d'une même tâche sur un même organe.

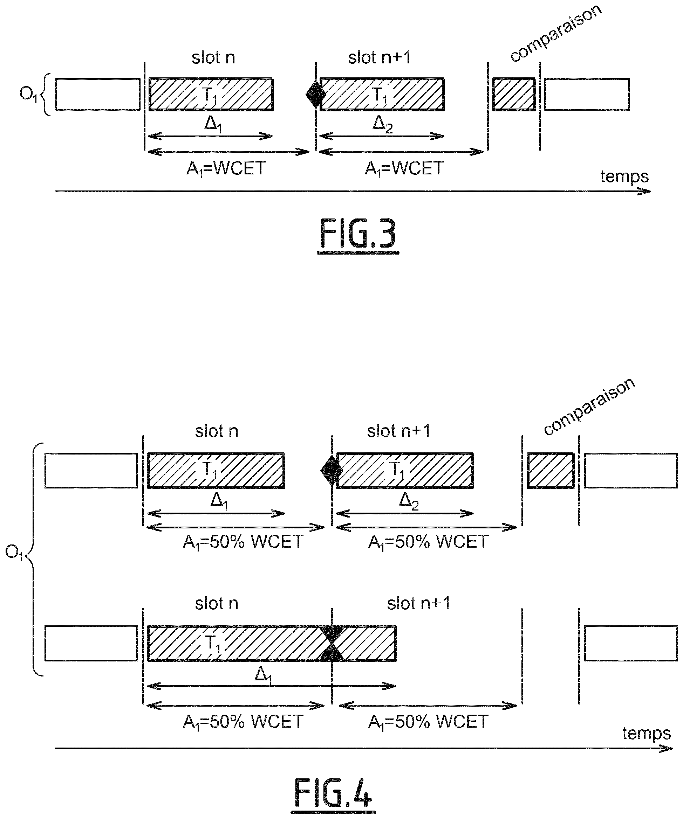

L'exemple de la figure 3 illustre l'exécution redondante de type temporelle d'une première tâche T₁ sur un même premier organe O₁ au cours d'une première période de temps Δ₁, puis au cours d'une deuxième période de temps Δ₂. Le premier temps alloué A₁ est dans cet exemple égal au pire temps d'exécution WCET de la première tâche T₁. La première période de temps Δ₁ étant inférieure ou égale au premier temps alloué A₁, l'exécution redondante de la première tâche T₁ sur le même premier organe O₁ est autorisée.

Dans l'exemple de la figure 4, le premier temps alloué A₁ est égal à la moitié du pire temps d'exécution WCET de la première tâche T₁. Lorsque la première condition est remplie, la première tâche T₁ est exécutée deux fois de suite sur le même premier organe O₁, comme cela est illustré sur le dessin du haut de la figure 4. Lorsque la première condition n'est pas vérifiée, la première tâche T₁ est exécutée seulement une fois sur le premier organe O₁, comme cela est illustré sur le dessin du bas de la figure 4.

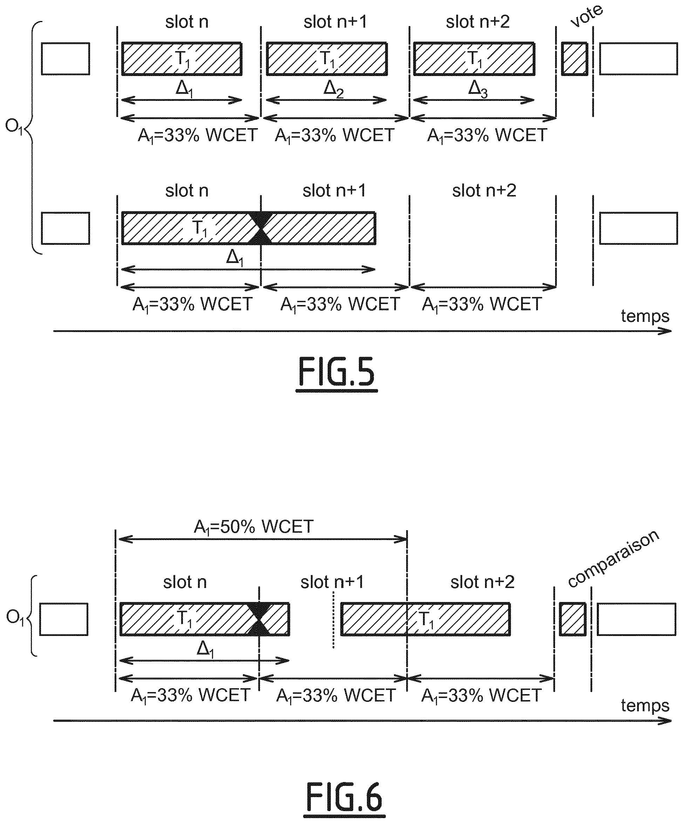

Dans l'exemple de la figure 5, le premier temps alloué A₁ est égal à un tiers du pire temps d'exécution WCET de la première tâche T₁. Lorsque la première condition est remplie, la première tâche T₁ est exécutée trois fois de suite sur le même premier organe O₁, comme cela est illustré sur le dessin du haut de la figure 5. Une telle exécution redondante est appelée « redondance triple ». Lorsque la première condition n'est pas vérifiée, la première tâche T₁ est exécutée seulement une fois sur le premier organe O₁, comme cela est illustré sur le dessin du bas de la figure 5.

Le procédé comprend, ensuite, une étape 160 de comparaison du premier résultat avec chaque deuxième résultat obtenu et de chaque deuxième résultat entre eux.

Par exemple, dans le cas où un premier résultat et deux deuxièmes résultats sont obtenus, si seul le premier résultat est erroné, les comparaisons du premier résultat avec chacun des deuxièmes résultats présenteront des différences. En outre, la comparaison des deuxièmes résultats entre eux permettra de conclure que les deuxièmes résultats sont corrects et que le premier résultat est erroné.

Puis, le procédé comprend une étape 170 de détermination de l'état de fonctionnement du système 1 en fonction de l'étape de comparaison 160.

Lorsque les résultats obtenus sont identiques, le système 1 est considéré « fiable » et les étapes 110 à 160 sont répétées.

Lorsque les résultats obtenus ne sont pas identiques, cela indique qu'une erreur s'est produite lors de l'exécution de la tâche. Le système 1 est alors considéré « défaillant». Dans ce cas, une alarme est générée pour informer l'opérateur d'une défaillance du système 1.

En particulier, une simple redondance, c'est-à-dire deux exécutions successives d'une tâche sur un organe, telles qu'illustrées sur les figures 3 et 4, permet de détecter une défaillance du système 1 sans la corriger. Une triple redondance telle qu'illustrée sur la figure 5, permet de détecter une défaillance du système 1 et de la corriger par réalisation d'un vote entre les trois résultats obtenus lorsque deux résultats sont identiques.

En variante, pour les redondances triples ou d'ordres supérieurs, lorsque la première condition n'est pas remplie mais que la première période de temps Δ₁ est inférieure ou égale à une durée prédéterminée pour la tâche, le procédé met quand même en œuvre les étapes 150 à 170. La redondance est dite effectuée en « mode dégradé ».

La figure 6 illustre un exemple de redondance mise en œuvre en mode dégradée. Dans cet exemple, le premier temps alloué A₁ pour la première tâche T₁ est égal à un tiers du pire temps d'exécution WCET et la durée prédéterminée pour la première tâche T₁ est égale à la moitié du pire temps d'exécution WCET. Ainsi, bien que la première période de temps Δ₁ soit supérieure au premier temps alloué A₁, la première tâche T₁ est exécutée une seconde fois sur le même premier organe O₁. Par contre, la première tâche T₁ ne pourra pas être exécutée une troisième fois. Ainsi, dans le cas d'une redondance triple, un fonctionnement en mode dégradé permet de détecter une défaillance du système 1, mais ne permet pas de la corriger.

Ainsi, le procédé utilise, d'une part, la redondance temporelle pour adresser les problèmes liés à la dégradation de la fiabilité des composants et, d'autre part, un ordonnancement adaptatif des tâches pour permettre une réduction des marges prises sur le pire temps d'exécution de chaque tâche.

En particulier, des intervalles de temps, appelés « slots » en anglais, sont alloués statiquement à chaque tâche pour permettre une exécution redondante des tâches et une comparaison des résultats obtenus. Dans le cas d'un dépassement d'un intervalle de temps, l'ordonnancement des tâches est modifié dynamiquement pour que les intervalles de temps dédiés aux exécutions redondantes des tâches permettent aux tâches de finir de s'exécuter.

Ainsi, l'ordonnancement des tâches est modifié pour que les marges temporelles du pire temps d'exécution soient absorbées dans les intervalles de temps initialement prévus pour la redondance. En outre, l'allocation de premiers temps alloués inférieurs aux pires temps d'exécution permet de réduire les marges de conception.

Ainsi, la mise en œuvre d'une exécution redondante temporelle des tâches T₁,..., Tₙ du système 1 permet de contrôler l'état de fonctionnement du système 1 et d'améliorer ainsi la fiabilité du système 1. Les étapes de test permettent de mettre en œuvre l'exécution redondante des tâches T₁,..., Tₙ uniquement lorsqu'une telle redondance ne dégrade pas les performances du système 1. Cela permet ainsi de respecter les contraintes temporelles des systèmes temps-réel.

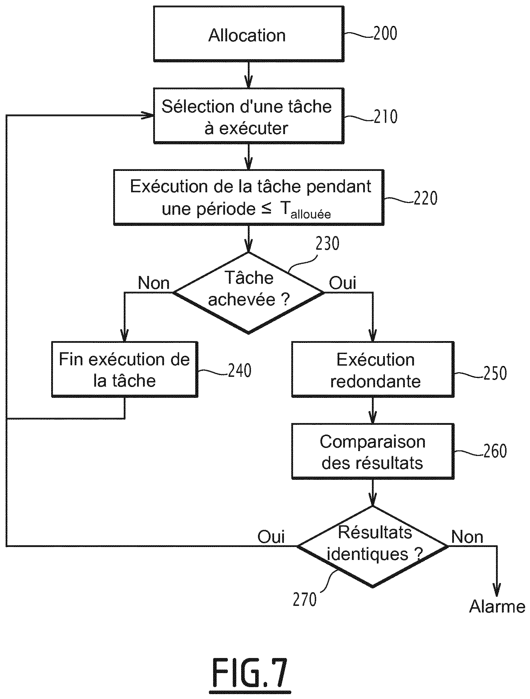

Selon un deuxième mode de mise en œuvre, tel qu'illustré sur la figure 7, le procédé de contrôle comprend les étapes suivantes.

Le procédé de contrôle comprend des étapes d'allocation 200 et de sélection 210 identiques aux étapes d'allocation 100 et de sélection 110 du procédé selon le premier exemple de mise en œuvre.

Le procédé de contrôle comprend, ensuite, une étape 220 de première exécution par le premier organe O₁ de la première tâche T₁ durant une première période de temps. La première période de temps est inférieure ou égale au premier temps alloué A₁.

Puis, le procédé de contrôle comprend une étape 230 de premier test d'une première condition. La première condition stipule que la première exécution de la première tâche T₁ est achevée.

Lorsque la première condition n'est pas remplie, le procédé de contrôle comporte une étape 240 de fin d'exécution de la première tâche T₁ dont une partie a été mise en œuvre lors de l'étape 220 de première exécution. A l'issue de la première exécution, un premier résultat est obtenu.

Puis, les étapes de sélection 210, de première exécution 220 et de premier test 230 sont répétées.

Lorsque la première condition est remplie, un premier résultat est obtenu à l'issue de la première exécution.

En outre, le procédé comprend une étape 250 de mise en œuvre d'une redondance de type temporelle et/ou spatiale. L'exécution redondante de type spatiale d'une tâche est l'exécution d'une même tâche en parallèle sur des organes différents. La redondance de type temporelle est mise en œuvre de manière similaire au premier exemple de mise en œuvre.

L'étape 250 de mise en œuvre d'une redondance permet d'obtenir au moins un deuxième résultat.

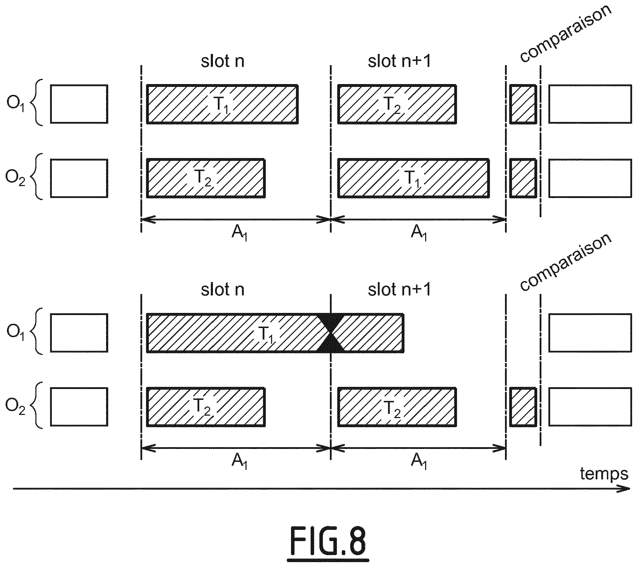

L'exemple de la figure 8 illustre l'exécution redondante de type temporelle et spatiale d'une première tâche T₁ et d'une deuxième tâche T₂ sur un premier organe O₁ et un deuxième organe O₂. Dans cet exemple, la première tâche T₁ est exécutée sur le premier organe O₁ en parallèle de la deuxième tâche T₂ exécutée sur le deuxième organe O₂. Comme illustré sur le dessin du haut de la figure 8, lorsque la première condition est vérifiée pour chacune des tâches T₁, T₂, la première tâche T₁, respectivement la deuxième tâche T₂ est exécutée de manière redondante sur le deuxième organe O₂, respectivement sur le premier organe O₁. Comme illustré sur le dessin du bas de la figure 8, la première tâche T₁ ne vérifiant pas la première condition n'est pas exécutée de manière redondante sur l'autre organe O₂. Par contre, la deuxième tâche T₂ remplissant la première condition est exécutée par une redondance de type temporelle sur le même organe O₂.

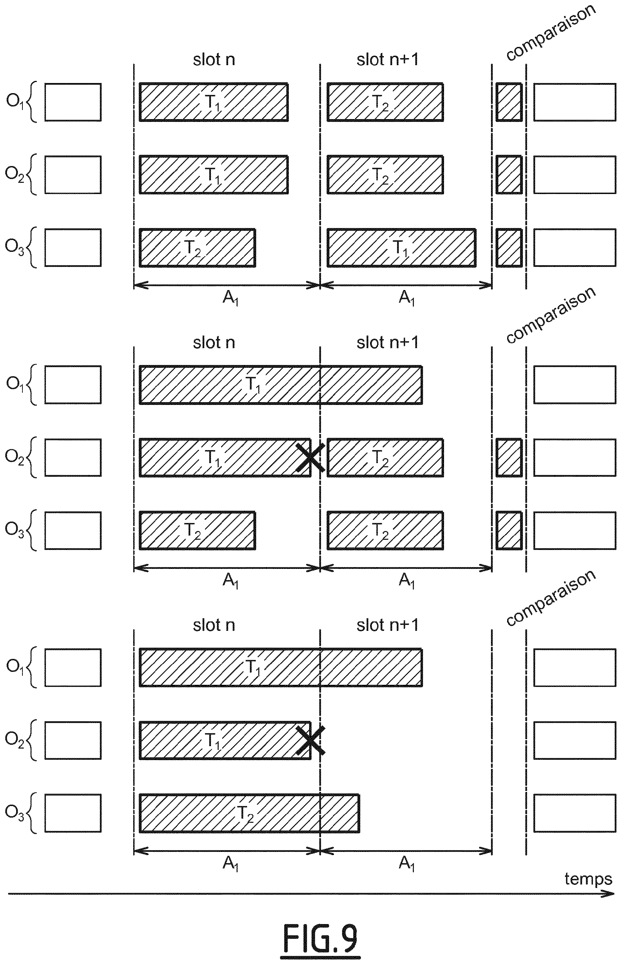

L'exemple de la figure 9 illustre l'exécution d'une redondance temporelle et d'une triple redondance spatiale d'une première tâche T₁ et d'une deuxième tâche T₂ sur trois organes O₁, O₂, O₃ du système 1. En premier lieu, la première tâche T₁ est exécutée en parallèle par une redondance de type spatiale sur le premier organe O₁ durant une première période de temps et sur le deuxième organe O₂ durant une deuxième période de temps. Lorsque la première condition est remplie, la première exécution de la première tâche T₁ sur le premier organe O₁ permet d'obtenir un premier résultat et la deuxième exécution permet d'obtenir un deuxième résultat.

En parallèle de la première exécution et de la deuxième exécution de la première tâche T₁, la deuxième tâche T₂ est exécutée durant une troisième période de temps sur le troisième organe O₃. Puis, le procédé comprend une étape de deuxième test d'une deuxième condition selon laquelle la troisième exécution de la deuxième tâche T₂ est achevée. Lorsque la deuxième condition est remplie, la troisième exécution permet d'obtenir un troisième résultat.

Lorsque la première et la deuxième condition sont remplies, la première tâche T₁ est exécutée de manière redondante sur le troisième organe O₃ permettant d'obtenir un deuxième résultat et la deuxième tâche T₂ est exécutée de manière redondante sur le premier organe O₁ et sur le deuxième organe O₂. Une telle situation est illustrée sur le dessin du haut de la figure 9.

Lorsque la première condition n'est pas vérifiée, le procédé finit l'exécution de la première tâche T₁ sur le premier organe O₁ mais interrompt la deuxième exécution de la première tâche T₁ sur le deuxième organe O₂.

Si la deuxième condition est vérifiée, le procédé exécute à nouveau la deuxième tâche T2 sur le troisième organe O₃, ainsi que sur le deuxième organe O₂ pour lequel l'exécution de la première tâche T₁ a été interrompue. Une telle situation est illustrée sur le dessin du milieu de la figure 9.

Si la deuxième condition n'est pas vérifiée, la première tâche T₁ et la deuxième tâche T₂ ne sont pas exécutées de manière redondante. Une telle situation est illustrée sur le dessin du bas de la figure 9.

Puis, le procédé de contrôle comprend des étapes de comparaison 260 et de détermination 270 identiques aux étapes de comparaison 160 et de détermination 170 du procédé selon le premier exemple de mise en œuvre.

En particulier, lorsqu'à l'issue de l'étape 250 de mise en œuvre d'une redondance, au moins deux deuxièmes résultats sont obtenus, l'étape de détermination 270 est mise en œuvre par réalisation d'un vote entre le premier résultat et les au moins deux deuxièmes résultats.

Les avantages cités pour le premier exemple de mise en œuvre s'appliquent également pour le deuxième exemple de mise en œuvre.

En outre, la redondance spatiale présente l'avantage de détecter aussi bien des fautes permanentes, affectant plusieurs exécutions, que des fautes transitoires, affectant une seule exécution, et cela à la différence de la redondance temporelle qui permet de détecter uniquement les fautes transitoires. Ainsi, une défaillance permanente d'un organe du système 1 est susceptible d'être détectée.

L'homme du métier comprendra que l'invention ne se limite pas aux modes de réalisation décrits, ni aux exemples particuliers de la description.

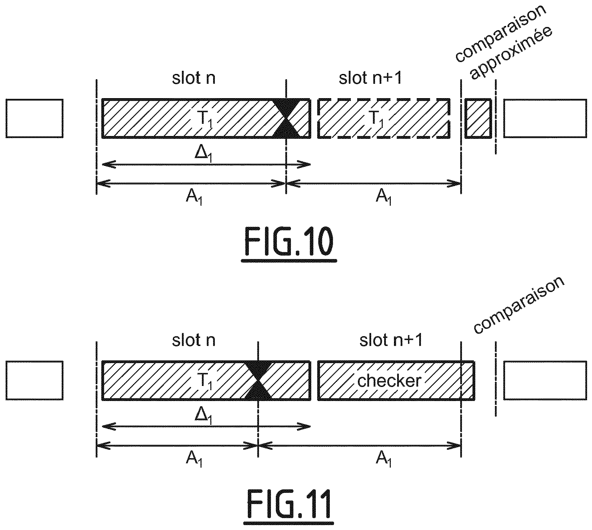

Par exemple, la première tâche T₁ sélectionnée est décomposable en un premier nombre de sous-tâches et lorsque la première condition n'est pas remplie, le procédé comporte en outre une étape d'exécution d'un deuxième nombre de sous-tâches de la tâche T₁ sélectionnée. Le deuxième nombre de sous-tâches est strictement inférieur au premier nombre de sous-tâches. Ainsi comme illustré sur la figure 10, lorsque la première condition n'est pas vérifiée pour une première tâche T₁ s'exécutant sur un premier organe O₁, la première tâche T₁ est tout de même exécutée de manière redondante sur le même premier organe O₁ mais en mode « dégradé », c'est-à-dire que le temps d'exécution est diminué mais qu'en contre-partie le résultat obtenu est moins précis. L'étape de comparaison consiste alors à comparer l'ordre de grandeur des résultats obtenus avec une tolérance préalablement fixée. Si la comparaison est jugée positive, les résultats obtenus lors de la première exécution, c'est-à-dire lors de l'exécution non dégradée, sont utilisés.

En variante et comme illustré sur la figure 11, lorsque la première condition n'est pas remplie, le procédé comporte en outre une étape de vérification de la pertinence du premier résultat obtenu. Par exemple, l'étape de vérification consiste à vérifier que le premier résultat obtenu est compris dans une plage de valeurs prédéterminées.

## Revendications

1. Procédé de contrôle de l'état de fonctionnement d'un système (1), le système (1) comprenant au moins un premier organe (O₁) propre à exécuter des tâches (T₁,..., Tₙ), le procédé comprenant les étapes de :
- sélection (110) d'une première tâche (T₁) à exécuter par le premier organe (O₁), la première tâche (T₁) étant exécutable en un premier temps alloué (A₁),
- première exécution (120) par le premier organe (O₁) de la première tâche (T₁) sélectionnée, la première exécution par le premier organe (O₁) de la première tâche (T₁) permettant d'obtenir un premier résultat et définissant une première période de temps (Δ₁),
- premier test (130) d'une première condition selon laquelle la première période de temps (Δ₁) est inférieure ou égale au premier temps alloué (A₁),
lorsque la première condition est remplie, le procédé comporte également les étapes de :
- mise en œuvre (150) d'au moins une deuxième exécution de la même première tâche (T₁) par le même premier organe (O₁) pendant une deuxième période de temps (Δ₂), chaque deuxième exécution permettant d'obtenir un deuxième résultat,
- comparaison (160) du premier résultat avec chaque deuxième résultat, et
- détermination (170) de l'état de fonctionnement du système (1) en fonction de l'étape de comparaison (160),
**caractérisé en ce que** lorsque la première condition n'est pas remplie, le procédé comporte également une étape (140) d'attente pendant un temps d'attente, puis de répétition des étapes de sélection (110), de première exécution (120) et de premier test (130), la somme du temps d'attente et de la première période de temps (Δ₁) étant égale à un multiple du premier temps alloué (A₁), la somme du temps d'attente et de la première période de temps étant supérieure ou égale au pire temps d'exécution de la première tâche.

2. Procédé selon la revendication 1, dans lequel lorsque la première condition n'est pas remplie et que la première période de temps (Δ₁) est inférieure ou égale à une durée prédéterminée, le procédé comporte également les étapes de mise en œuvre d'au moins une deuxième exécution (150), de comparaison (160) et de détermination (170).

3. Procédé de contrôle de l'état de fonctionnement d'un système (1), le système (1) comprenant au moins un premier organe (O₁) propre à exécuter des tâches (T₁,...,Tₙ), le procédé comprenant les étapes de :
- sélection (210) d'une première tâche (T₁) à exécuter par le premier organe (O₁), la première tâche (T₁) étant exécutable en un premier temps alloué (A₁),
- première exécution (220) par le premier organe (O₁) de la première tâche (T₁) sélectionnée durant une première période de temps, la première période de temps étant inférieure ou égale au premier temps alloué (A₁),
- premier test (230) d'une première condition selon laquelle la première exécution de la première tâche (T₁) est achevée, l'étape (230) de premier test ayant lieu après la première période de temps,
lorsque la première condition est remplie, le procédé comporte également les étapes de :
- obtention du résultat de la première exécution de la première tâche (T₁) par le premier organe (O₁) permettant d'obtenir un premier résultat,
- comparaison (260) du premier résultat avec au moins un deuxième résultat, chaque deuxième résultat étant obtenu par la mise en œuvre (250) d'une redondance de type spatiale et/ou temporelle, la redondance de type spatial étant mise en œuvre par au moins un deuxième organe (O₂) du système (1), et
- détermination (270) de l'état de fonctionnement du système (1) en fonction de l'étape de comparaison (260),
lorsque la première condition n'est pas remplie, le procédé comporte également une étape (240) pour finir l'exécution de la première tâche (T₁) dont une partie a été mise en œuvre durant la première période de temps, permettant d'obtenir le premier résultat.

4. Procédé selon la revendication 3, dans lequel le système (1) comporte un deuxième organe (O₂) et un troisième organe (O₃), le deuxième organe (O₂) et le troisième organe (O₃) étant propres à exécuter des tâches (T₁,...,Tₙ), le procédé comprenant les étapes de :
- deuxième exécution de la même première tâche (T₁) par le deuxième organe (O₂) durant une deuxième période de temps, la deuxième exécution étant mise en œuvre en parallèle de la première exécution, la deuxième exécution permettant d'obtenir un deuxième résultat lorsque la première condition est remplie,
- troisième exécution d'une deuxième tâche (T₂) par le troisième organe (O₃) durant une troisième période de temps, la troisième exécution étant mise en œuvre en parallèle de la première exécution et de la deuxième exécution,
- deuxième test d'une deuxième condition selon laquelle la troisième exécution de la deuxième tâche (T₂) est achevée,
lorsque la première condition et la deuxième condition sont remplies, le procédé comporte également une étape de quatrième exécution de la première tâche (T₁) par le troisième organe (O₃) durant une quatrième période de temps, la quatrième exécution permettant d'obtenir un autre deuxième résultat.

5. Procédé selon la revendication 3 ou 4, dans lequel lorsque la première condition est remplie, le procédé comporte également une étape de mise en œuvre d'au moins deux autres exécutions de la première tâche (T₁) par le même premier organe (O₁), chaque autre exécution permettant d'obtenir un deuxième résultat.

6. Procédé selon l'une quelconque des revendications 4 ou 5, dans lequel l'étape de détermination (270) de l'état de fonctionnement est mise en œuvre par utilisation d'un vote parmi le premier résultat et les au moins deux deuxièmes résultats.

7. Procédé selon l'une quelconque des revendications 1 à 6, dans lequel pour chaque tâche (T₁,...,Tₙ), il est défini un temps maximal d'exécution, le temps alloué étant fonction du nombre d'exécutions redondantes de type temporelle de la tâche (T₁,..., Tₙ) et du temps maximal d'exécution de la tâche (T₁,..., Tₙ).

8. Procédé selon la revendication 7, dans lequel le temps alloué est égal au rapport entre le temps maximal d'exécution de la tâche (T₁,..., Tₙ) et le nombre d'exécutions redondantes de type temporelle de la tâche (T₁,..., Tₙ).

9. Procédé selon l'une quelconque des revendications 1 à 8, dans lequel, la tâche (T₁) sélectionnée est décomposable en un premier nombre de sous-tâches et dans lequel, lorsque la première condition n'est pas remplie, le procédé comporte en outre une étape d'exécution d'un deuxième nombre de sous-tâches de la tâche (T₁) sélectionnée, le deuxième nombre étant strictement inférieur au premier nombre de sous-tâches.

10. Procédé selon l'une quelconque des revendications 1 à 8, dans lequel, lorsque la première condition n'est pas remplie et que le premier résultat est obtenu, le procédé comporte en outre une étape de vérification de la pertinence du premier résultat obtenu.

11. Contrôleur (2) de l'état de fonctionnement d'un système (1), le système (1) comprenant au moins un premier organe (O₁) propre à exécuter des tâches (T₁,...,Tₙ), le contrôleur (2) étant propre à mettre en œuvre les étapes suivantes :
- sélection (110) d'une première tâche (T₁) à exécuter par le premier organe (O₁), la première tâche (T₁) étant exécutable en un premier temps alloué (A₁),
- première exécution (120) par le premier organe (O₁) de la première tâche (T₁) sélectionnée, la première exécution par le premier organe (O₁) de la première tâche (T₁) permettant d'obtenir un premier résultat et définissant une première période de temps (Δ₁),
- premier test (130) d'une première condition selon laquelle la première période de temps (Δ₁) est inférieure ou égale au premier temps alloué (A₁),
lorsque la première condition est remplie, le contrôleur étant également propre à mettre en œuvre les étapes de :
- mise en œuvre (150) d'au moins une deuxième exécution de la même première tâche (T₁) par le même premier organe (O₁) pendant une deuxième période de temps (Δ₂), chaque deuxième exécution permettant d'obtenir un deuxième résultat,
- comparaison (160) du premier résultat avec chaque deuxième résultat, et
- détermination (170) de l'état de fonctionnement du système (1) en fonction de l'étape de comparaison (160),
**caractérisé en ce que** lorsque la première condition n'est pas remplie, le contrôleur est également propre à mettre en œuvre une étape (140) d'attente pendant un temps d'attente, puis de répétition des étapes de sélection (110), de première exécution (120) et de premier test (130), la somme du temps d'attente et de la première période de temps (Δ₁) étant égale à un multiple du premier temps alloué (A₁), la somme du temps d'attente et de la première période de temps étant supérieure ou égale au pire temps d'exécution de la tâche.

12. Contrôleur (2) de l'état de fonctionnement d'un système (1), le système (1) comprenant au moins un premier organe (O₁) propre à exécuter des tâches (T₁,..., Tₙ), le contrôleur (2) étant propre à mettre en œuvre les étapes suivantes.
- sélection (210) d'une première tâche (T₁) à exécuter par le premier organe (O₁), la première tâche (T₁) étant exécutable en un premier temps alloué (A₁),
- première exécution (220) par le premier organe (O₁) de la première tâche (T₁) sélectionnée durant une première période de temps, la première période de temps étant inférieure ou égale au premier temps alloué (A₁),
- premier test (230) d'une première condition selon laquelle la première exécution de la première tâche (T₁) est achevée, l'étape (230) de premier test ayant lieu après la première période de temps,
lorsque la première condition est remplie, le contrôleur étant également propre à mettre en œuvre les étapes de :
- obtention du résultat de la première exécution de la première tâche (T₁) par le premier organe (O₁) permettant d'obtenir un premier résultat,
- comparaison (260) du premier résultat avec au moins un deuxième résultat, chaque deuxième résultat étant obtenu par la mise en œuvre (250) d'une redondance de type spatiale et/ou temporelle, la redondance de type spatial étant mise en œuvre par au moins un deuxième organe (O₂) du système (1), et
- détermination (270) de l'état de fonctionnement du système (1) en fonction de l'étape de comparaison (260),
lorsque la première condition n'est pas remplie, le contrôleur étant également apte à mettre en œuvre une étape (240) pour finir l'exécution de la première tâche (T₁) dont une partie a été mise en œuvre durant la première période de temps, permettant d'obtenir le premier résultat.

13. Appareil de transport comprenant un contrôleur (2) selon la revendication 11 ou 12.

## Patentansprüche

1. Verfahren zum Steuern des Betriebszustands eines Systems (1), wobei das System (1) mindestens ein erstes Element (O₁) aufweist, das geeignet ist, Aufgaben (T₁, ..., Tₙ) auszuführen, wobei das Verfahren die Schritte aufweist:
- Auswahl (110) einer vom ersten Element (O₁) auszuführenden ersten Aufgabe (T₁), wobei die erste Aufgabe (T₁) in einer ersten zugewiesenen Zeit (A₁) ausführbar ist,
- erste Ausführung (120) durch das erste Element (O₁) der ersten ausgewählten Aufgabe (T₁), wobei die erste Ausführung der ersten Aufgabe (T₁) durch das erste Element (O₁) es ermöglicht, ein erstes Ergebnis zu erhalten, und eine erste Zeitdauer (Δ₁) definiert,
- erste Prüfung (130) einer ersten Bedingung, gemäß der die erste Zeitdauer (Δ₁) kleiner oder gleich der ersten zugewiesenen Zeit (A₁) ist,
wenn die erste Bedingung erfüllt ist, weist das Verfahren auch die Schritte auf:
- Durchführen (150) mindestens einer zweiten Ausführung derselben ersten Aufgabe (T₁) durch dasselbe erste Element (O₁) während einer zweiten Zeitdauer (Δ₂), wobei jede zweite Ausführung es ermöglicht, ein zweites Ergebnis zu erhalten,
- Vergleich (160) des ersten Ergebnisses mit jedem zweiten Ergebnis und
- Bestimmung (170) des Betriebszustands des Systems (1) in Abhängigkeit vom Vergleichsschritt (160),
dadurch charakterisiert, dass wenn die erste Bedingung nicht erfüllt ist, das Verfahren auch einen Schritt (140) zum Warten während einer Wartezeit und dann Wiederholen der Schritte der Auswahl (110), der ersten Ausführung (120) und der ersten Prüfung (130) aufweist,
wobei die Summe der Wartezeit und der ersten Zeitdauer (Δ₁) gleich einem Vielfachen der ersten zugewiesenen Zeit (A₁) ist, wobei die Summe der Wartezeit und der ersten Zeitdauer größer oder gleich der schlechtesten Ausführungszeit der ersten Aufgabe ist.

2. Verfahren nach Anspruch 1, wobei, wenn die erste Bedingung nicht erfüllt ist und die erste Zeitdauer (Δ₁) kleiner oder gleich einer vorbestimmten Dauer ist, das Verfahren auch die Schritte zum Durchführen mindestens einer zweiten Ausführung (150), zum Vergleich (160) und zur Bestimmung (170) aufweist.

3. Verfahren zum Steuern des Betriebszustands eines Systems (1), wobei das System (1) mindestens ein erstes Element (O₁) aufweist, das geeignet ist, Aufgaben (T₁, ..., Tₙ) auszuführen, wobei das Verfahren die Schritte aufweist:
- Auswahl (210) einer vom ersten Element (O₁) auszuführenden ersten Aufgabe (T₁), wobei die erste Aufgabe (T₁) in einer ersten zugewiesenen Zeit (A₁) ausführbar ist,
- erste Ausführung (220) durch das erste Element (O₁) der ausgewählten ersten Aufgabe (T₁) während einer ersten Zeitdauer, wobei die erste Zeitdauer kleiner oder gleich der ersten zugewiesenen Zeitdauer (A₁) ist,
- erste Prüfung (230) einer ersten Bedingung, gemäß der die erste Ausführung der ersten Aufgabe (T₁) abgeschlossen ist, wobei der Schritt (230) der ersten Prüfung nach der ersten Zeitdauer stattfindet,
wenn die erste Bedingung erfüllt ist, weist das Verfahren auch die Schritte auf:
- Erhalten des Ergebnisses der ersten Ausführung der ersten Aufgabe (T₁) durch das erste Element (O₁), was es ermöglicht, ein erstes Ergebnis zu erhalten,
- Vergleich (260) des ersten Ergebnisses mit mindestens einem zweiten Ergebnis, wobei jedes zweite Ergebnis durch die Implementierung (250) einer räumlichen und / oder zeitlichen Redundanz erhalten wird, wobei die räumliche Redundanz durch mindestens ein zweites Element (O₂) des Systems (1) implementiert wird, und
- Bestimmung (270) des Betriebszustands des Systems (1) in Abhängigkeit von dem Vergleichsschritt (260),
wenn die erste Bedingung nicht erfüllt ist, weist das Verfahren auch einen Schritt (240) zum Abschließen der Ausführung der ersten Aufgabe (T₁) auf, von der ein Teil während der ersten Zeitdauer durchgeführt wurde, was es ermöglicht, das erste Ergebnis zu erhalten.

4. Verfahren nach Anspruch 3, wobei das System (1) ein zweites Element (O₂) und ein drittes Element (03) aufweist, wobei das zweite Element (O₂) und das dritte Element (O₃) zum Ausführen von Aufgaben (T₁, ..., Tₙ) geeignet sind, wobei das Verfahren die Schritte aufweist:
- zweite Ausführung derselben ersten Aufgabe (T₁) durch das zweite Element (O₂) während einer zweiten Zeitdauer, wobei die zweite Ausführung parallel zur ersten Ausführung durchgeführt wird, wobei die zweite Ausführung es ermöglicht, ein zweites Ergebnis zu erhalten, wenn die erste Bedingung erfüllt ist,
- dritte Ausführung einer zweiten Aufgabe (T₂) durch das dritte Element (O₃) während eines dritten Zeitraums, wobei die dritte Ausführung parallel zur ersten Ausführung und zur zweiten Ausführung durchgeführt wird,
- zweite Prüfung einer zweiten Bedingung, gemäß der die dritte Ausführung der zweiten Aufgabe (T₂) abgeschlossen ist,
wenn die erste Bedingung und die zweite Bedingung erfüllt sind, weist das Verfahren auch einen Schritt der vierten Ausführung der ersten Aufgabe (T₁) durch das dritte Element (O₃) während eines vierten Zeitraums auf, wobei es die vierte Ausführung ermöglicht, ein anderes zweites Ergebnis zu erhalten.

5. Verfahren nach Anspruch 3 oder 4, bei dem, wenn die erste Bedingung erfüllt ist, das Verfahren auch einen Schritt des Durchführens von mindestens zwei anderen Ausführungen der ersten Aufgabe (T₁) durch dasselbe erste Element (O₁) aufweist, wobei jede andere Ausführung es ermöglicht, ein zweites Ergebnis zu erhalten.

6. Verfahren nach einem der Ansprüche 4 oder 5, wobei der Schritt des Bestimmens (270) des Betriebszustands unter Verwendung einer Abstimmung zwischen dem ersten Ergebnis und den mindestens zwei zweiten Ergebnissen implementiert wird.

7. Verfahren nach einem der Ansprüche 1 bis 6, bei dem für jede Aufgabe (T₁, ..., Tₙ) eine maximale Ausführungszeit definiert ist, wobei die zugewiesene Zeit eine Funktion der Anzahl zeitlich redundanter Ausführungen der Aufgabe (T₁, ..., Tₙ) und der maximalen Ausführungszeit der Aufgabe (T₁, ..., Tₙ) ist.

8. Verfahren nach Anspruch 7, bei dem die zugewiesene Zeit gleich dem Verhältnis zwischen der maximalen Ausführungszeit der Aufgabe (T₁, ..., Tₙ) und der Anzahl zeitlich redundanter Ausführungen der Aufgabe (T₁, ..., Tₙ) ist.

9. Verfahren nach einem der Ansprüche 1 bis 8, bei dem die ausgewählte Aufgabe (T₁) in eine erste Anzahl von Unteraufgaben zerlegt werden kann und bei dem, wenn die erste Bedingung nicht erfüllt ist, das Verfahren außerdem einen Schritt des Ausführens einer zweiten Anzahl von Unteraufgaben der ausgewählten Aufgabe (T₁) aufweist, wobei die zweite Anzahl strikt kleiner als die erste Anzahl von Unteraufgaben ist.

10. Verfahren nach einem der Ansprüche 1 bis 8, bei dem, wenn die erste Bedingung nicht erfüllt ist und das erste Ergebnis erhalten wird, das Verfahren ferner einen Schritt des Verifizierens der Relevanz des ersten erhaltenen Ergebnisses aufweist.

11. Steuerung (2) des Betriebszustands eines Systems (1), wobei das System (1) mindestens ein erstes Element (O₁) aufweist, das geeignet ist, Aufgaben (T₁, ..., Tₙ) auszuführen, wobei die Steuerung (2) geeignet ist, die folgenden Schritte durchzuführen:
- Auswahl (110) einer vom ersten Element (O₁) auszuführenden ersten Aufgabe (T₁), wobei die erste Aufgabe (T₁) in einer ersten zugewiesenen Zeit (A₁) ausführbar ist,
- erste Ausführung (120) durch das erste Element (O₁) der ersten ausgewählten Aufgabe (T₁), wobei die erste Ausführung der ersten Aufgabe (T₁) durch das erste Element (O₁) es ermöglicht, ein erstes Ergebnis zu erhalten, und eine erste Zeitdauer (Δ₁) definiert,
- erste Prüfung (130) einer ersten Bedingung, gemäß der die erste Zeitdauer (Δ₁) kleiner oder gleich der ersten zugewiesenen Zeit (A₁) ist,
wenn die erste Bedingung erfüllt ist, ist die Steuerung auch geeignet, die Schritte durchzuführen:
- Durchführen (150) mindestens einer zweiten Ausführung derselben ersten Aufgabe (T₁) durch dasselbe erste Element (O₁) während einer zweiten Zeitdauer (Δ₂), wobei jede zweite Ausführung es ermöglicht, ein zweites Ergebnis zu erhalten,
- Vergleich (160) des ersten Ergebnisses mit jedem zweiten Ergebnis und
- Bestimmung (170) des Betriebszustands des Systems (1) in Abhängigkeit vom Vergleichsschritt (160),
dadurch charakterisiert, dass wenn die erste Bedingung nicht erfüllt ist, die Steuerung auch geeignet ist, einen Schritt (140) zum Warten während einer Wartezeit und dann Wiederholen der Schritte der Auswahl (110), der ersten Ausführung (120) und der ersten Prüfung (130) durchzuführen, wobei die Summe der Wartezeit und der ersten Zeitdauer (Δ₁) gleich einem Vielfachen der ersten zugewiesenen Zeit (A₁) ist, wobei die Summe der Wartezeit und der ersten Zeitdauer größer oder gleich der schlechtesten Ausführungszeit der ersten Aufgabe ist.

12. Steuerung (2) des Betriebszustands eines Systems (1), wobei das System (1) mindestens ein erstes Element (O₁) aufweist, das geeignet ist, Aufgaben (T₁,..., Tₙ) auszuführen, wobei die Steuerung geeignet ist, die folgenden Schritte durchzuführen:
- Auswahl (210) einer vom ersten Element (O₁) auszuführenden ersten Aufgabe (T₁), wobei die erste Aufgabe (T₁) in einer ersten zugewiesenen Zeit (A₁) ausführbar ist,
- erste Ausführung (220) durch das erste Element (O₁) der ausgewählten ersten Aufgabe (T₁) während einer ersten Zeitdauer, wobei die erste Zeitdauer kleiner oder gleich der ersten zugewiesenen Zeitdauer (A₁) ist,
- erste Prüfung (230) einer ersten Bedingung, gemäß der die erste Ausführung der ersten Aufgabe (T₁) abgeschlossen ist, wobei der Schritt (230) der ersten Prüfung nach der ersten Zeitdauer stattfindet,
wenn die erste Bedingung erfüllt ist, ist die Steuerung auch in der Lage, die Schritte durchzuführen:
- Erhalten des Ergebnisses der ersten Ausführung der ersten Aufgabe (T₁) durch das erste Element (O₁), was es ermöglicht, ein erstes Ergebnis zu erhalten,
- Vergleich (260) des ersten Ergebnisses mit mindestens einem zweiten Ergebnis, wobei jedes zweite Ergebnis durch die Implementierung (250) einer räumlichen und / oder zeitlichen Redundanz erhalten wird, wobei die räumliche Redundanz durch mindestens ein zweites Element (O₂) des Systems (1) implementiert wird, und
- Bestimmung (270) des Betriebszustands des Systems (1) in Abhängigkeit von dem Vergleichsschritt (260),
wenn die erste Bedingung nicht erfüllt ist, ist die Steuerung auch dazu geeignet, einen Schritt (240) zum Abschließen der Ausführung der ersten Aufgabe (T₁) durchzuführen, von der ein Teil während der ersten Zeitdauer durchgeführt wurde, was es ermöglicht, das erste Ergebnis zu erhalten.

13. Transportvorrichtung mit einer Steuerung (2) nach Anspruch 11 oder 12.

## Claims

1. Method for controlling the operating state of a system (1), the system (1) comprising at least one first member (O₁) capable of executing tasks (T₁,..., Tₙ), the method comprising the steps of:
- selection (110) of a first task (T₁) to be executed by the first member (O₁), the first task (T₁) being executable in a first allotted time (A₁),
- first execution (120) by the first member (O₁) of the selected first task (T₁), the first execution by the first member (O₁) of the first task (T₁) allowing a first result to be obtained and defining a first time period (Δ₁),
- first test (130) of a first condition according to which the first time period (Δ₁) is less than or equal to the first allotted time (A₁),
when the first condition is met, the method also comprises the steps of:
- implementation (150) of at least one second execution of the same first task (T₁) by the same first member (O₁) during a second time period (Δ₂), each second execution allowing a second result to be obtained,
- comparison (160) of the first result with each second result, and
- determination (170) of the operating state of the system (1) as a function of the comparison step (160),
**characterised in that**, when the first condition is not met, the method also comprises a step (140) of waiting for a waiting time, then of repeating the steps of selection (110), of first execution (120) and of first test (130), the sum of the waiting time and the first time period (Δ₁) being equal to a multiple of the first allotted time (A₁), the sum of the waiting time and the first time period being greater than or equal to the worst execution time of the first task.

2. Method according to claim 1, wherein, when the first condition is not met and the first time period (Δ₁) is less than or equal to a predetermined duration, the method also comprises the steps of implementation of at least one second execution (150), of comparison (160) and of determination (170).

3. Method for controlling the operating state of a system (1), the system (1) comprising at least one first member (O₁) capable of executing tasks (T₁,..., Tₙ), the method comprising the steps of:
- selection (210) of a first task (T₁) to be executed by the first member (O₁), the first task (T₁) being executable in a first allotted time (A₁),
- first execution (220) by the first member (O₁) of the selected first task (T₁) during a first time period, the first time period being less than or equal to the first allotted time (A₁),
- first test (230) of a first condition according to which the first execution of the first task (T₁) is complete, the step (230) of first test taking place after the first time period,
when the first condition is met, the method also comprises the steps of:
- obtaining the result of the first execution of the first task (T₁) by the first member (O₁) allowing a first result to be obtained,
- comparison (260) of the first result with at least one second result, each second result being obtained by the implementation (250) of a spatial- and/or temporal-type redundancy, the spatial-type redundancy being implemented by at least one second member (O₂) of the system (1), and
- determination (270) of the operating state of the system (1) as a function of the comparison step (260),
when the first condition is not met, the method also comprises a step (240) for finishing the execution of the first task (T₁), part of which has been implemented during the first time period, allowing the first result to be obtained.

4. Method according to claim 3, wherein the system (1) comprises a second member (O₂) and a third member (O₃), the second member (O₂) and the third member (O₃) being capable of executing tasks (T₁,..., Tₙ), the method comprising the steps of:
- second execution of the same first task (T₁) by the second member (O₂) during a second time period, the second execution being implemented in parallel with the first execution, the second execution allowing a second result to be obtained when the first condition is met,
- third execution of a second task (T₂) by the third member (O₃) during a third time period, the third execution being implemented in parallel with the first execution and the second execution,
- second test of a second condition according to which the third execution of the second task (T₂) is complete,
when the first condition and the second condition are met, the method also comprises a step of fourth execution of the first task (T₁) by the third member (O₃) during a fourth time period, the fourth execution allowing another second result to be obtained.

5. Method according to claim 3 or 4, wherein, when the first condition is met, the method also comprises a step of implementation of at least two other executions of the first task (T₁) by the same first member (O₁), each other execution allowing a second result to be obtained.

6. Method according to either claim 4 or claim 5, wherein the step of determination (270) of the operating state is implemented by the use of a vote between the first result and the at least two second results.

7. Method according to any one of claims 1 to 6, wherein, for each task (T₁,..., Tₙ), a maximum execution time is defined, the allotted time being a function of the number of temporal-type redundant executions of the task (T₁,..., Tₙ) and of the maximum execution time of the task (T₁,..., Tₙ).

8. Method according to claim 7, wherein the allotted time is equal to the ratio of the maximum execution time of the task (T₁,..., Tₙ) to the number of temporal-type redundant executions of the task (T₁,..., Tₙ).

9. Method according to any one of claims 1 to 8, wherein the selected task (T₁) can be broken down into a first number of sub-tasks and wherein, when the first condition is not met, the method further comprises a step of execution of a second number of sub-tasks of the selected task (T₁), the second number being strictly less than the first number of sub-tasks.

10. Method according to any one of claims 1 to 8, wherein, when the first condition is not met and the first result is obtained, the method further comprises a step of verification of the relevance of the first result obtained.

11. Controller (2) of the operating state of a system (1), the system (1) comprising at least one first member (O₁) capable of executing tasks (T₁,..., Tₙ), the controller (2) being capable of implementing the following steps:
- selection (110) of a first task (T₁) to be executed by the first member (O₁), the first task (T₁) being executable in a first allotted time (A₁),
- first execution (120) by the first member (O₁) of the selected first task (T₁), the first execution by the first member (O₁) of the first task (T₁) allowing a first result to be obtained and defining a first time period (Δ₁),
- first test (130) of a first condition according to which the first time period (Δ₁) is less than or equal to the first allotted time (A₁),
when the first condition is met, the controller also being capable of implementing the steps of:
- implementation (150) of at least one second execution of the same first task (T₁) by the same first member (O₁) during a second time period (Δ₂), each second execution allowing a second result to be obtained,
- comparison (160) of the first result with each second result, and
- determination (170) of the operating state of the system (1) as a function of the comparison step (160),
**characterised in that**, when the first condition is not met, the controller is also capable of implementing a step (140) of waiting for a waiting time, then of repeating the steps of selection (110), of first execution (120) and of first test (130), the sum of the waiting time and the first time period (Δ₁) being equal to a multiple of the first allotted time (A₁), the sum of the waiting time and the first time period being greater than or equal to the worst execution time of the task.

12. Controller (2) of the operating state of a system (1), the system (1) comprising at least one first member (O₁) capable of executing tasks (T₁,..., Tₙ), the controller (2) being capable of implementing the following steps:
- selection (210) of a first task (T₁) to be executed by the first member (O₁), the first task (T₁) being executable in a first allotted time (A₁),
- first execution (220) by the first member (O₁) of the selected first task (T₁) during a first time period, the first time period being less than or equal to the first allotted time (A₁),
- first test (230) of a first condition according to which the first execution of the first task (T₁) is complete, the step (230) of first test taking place after the first time period,
when the first condition is met, the controller also being capable of implementing the steps of:
- obtaining the result of the first execution of the first task (T₁) by the first member (O₁) allowing a first result to be obtained,
- comparison (260) of the first result with at least one second result, each second result being obtained by the implementation (250) of a spatial- and/or temporal-type redundancy, the spatial-type redundancy being implemented by at least one second member (O₂) of the system (1), and
- determination (270) of the operating state of the system (1) as a function of the comparison step (260),
when the first condition is not met, the controller also being capable of implementing a step (240) for finishing the execution of the first task (T₁), part of which has been implemented during the first time period, allowing the first result to be obtained.

13. Transport device comprising a controller (2) according to claim 11 or 12.
